# DEMANDE DE BREVET EUROPEEN

(11) **EP 0 968 966 A1**
(43) Date de publication de la demande: **05.01.2000**
(21) Numéro de dépôt: 99401623.6
(22) Date de dépôt: 30.06.1999
(51) Int. Cl.: C02F 9/00

(54) **Procédé et dispositif d'oxydation de cyanures alcalins et/ou métalliques**

(30) Priorité: 01.07.1998 FR 9808385
(71) Demandeur: Société Européenne d'Hydrotechnologie, 95310 Saint-Ouen l'Aumône (FR); Société Française de Galvanoplastie, 80370 Bernaville (FR)
(72) Inventeur: Le Doeuff, Bernard, 86260 Saint Pierre de Maille (FR); Vasseur, Emmanuel, 62810 Manin (FR); Morin, Jean-Pierre, 77590 Bois Le Roi (FR)
(74) Mandataire: Le Roux, Martine

(57) **Abrégé**

La présente invention a pour objet un procédé, et un dispositif associé, d'oxydation de cyanures alcalins et/ou métalliques en solution aqueuse. Ledit procédé comprend l'ajout à ladite solution, maintenue à un pH suffisant pour minimiser voire éviter le dégagement d'acide cyanhydrique en son sein, d'un oxydant puissant. De façon caractéristique, ledit oxydant puissant est le peroxyde d'hydrogène et ladite solution, renfermant ledit peroxyde d'hydrogène, est soumise à l'action d'ultrasons.

## Description

La présente invention a pour objet un procédé original et un dispositif associé, pour l'oxydation de cyanures alcalins et/ou métalliques en solution aqueuse. Ledit procédé est particulièrement avantageux en ce qu'il permet l'élimination de cyanures sans générer de salinité supplémentaire dans les solutions traitées. Ledit procédé convient parfaitement pour le traitement d'effluents liquides industriels, issus des activités de traitement de surface, tels les effluents de galvanoplastie.

Le document DE-A-39 29 634 décrit un procédé d'élimination *in situ* de HCN ou de cyanures métalliques. Ledit procédé comprend la mise en oeuvre préalable d'une réaction chimique pour transformer les cyanures en nitriles puis celle d'une oxydation chimique, électrochimique ou physique desdits nitriles. Ledit procédé n'est pas décrit en référence au traitement d'effluents industriels et ne suggère en aucune façon une action combinée d'ultrasons et d'agents chimiques sur des cyanures.

Le problème technique abordé est ici celui du traitement d'effluents aqueux renfermant des cyanures. Les cyanures constituent des éléments très toxiques qui doivent être oxydés sous forme de cyanates, composés beaucoup moins toxiques. A ce jour, une telle oxydation a été obtenue, par l'ajout, dans l'effluent à traiter, d'un oxydant puissant, dans des conditions de pH et de température favorables à la réaction, oxydant puissant choisi parmi le chlore, l'eau de Javel. l'ozone, le peroxyde d'hydrogène et l'acide de CARO.

On précise ci-après, en référence au cyanure de sodium, pris à titre d'exemple, les réactions mises en jeu, avec chacun de ces oxydants :
- avec le chlore ou l'eau de Javel : NaCN + NaClO → NaCNO + NaCl
- avec l'ozone : NaCN + O₃ → NaCNO + O₂
- avec le peroxyde d'hydrogène : NaCN + H₂O₂ → NaCNO + H₂O
- avec l'acide de CARO : NaCN + H₂SO₅ → NaCNO + H₂SO₄.

L'utilisation de l'un quelconque desdits oxydants présente des difficultés et/ou graves inconvénients. En effet :
- l'utilisation de produits chlorés génère, dans l'effluent traité, une salinité et une alcalinité importante dans la mesure où il faut maintenir le pH dudit effluent à une valeur supérieure à 11,5, simultanément à l'ajout de chlore, pour éviter le dégagement de chlorure de cyanogène. Par ailleurs, l'oxydation d'effluents cyanurés contenant des produits organiques, par le chlore ou ses dérivés, est susceptible de générer des composés organiques halogénés, difficiles à traiter et polluants pour le milieu récepteur. Enfin, si l'eau de Javel oxyde de façon satisfaisante les cyanures de sodium, cuivre et zinc, il n'en est pas de même pour les cyanures de fer ou de nickel ;
- l'ozone est peu utilisé dans la mesure où son intervention nécessite des équipements spéciaux et relativement coûteux. Ledit ozone, du fait de son instabilité, doit en effet être produit sur le site même du traitement (de son utilisation) ;
- le peroxyde d'hydrogène est également peu utilisé car, lorsqu'il intervient comme oxydant, la vitesse de réaction est très lente, surtout pour les solutions diluées. Un excès de peroxyde d'hydrogène, nécessaire pour la mise en oeuvre de la réaction, induit par ailleurs un coût de traitement plus élevé qu'avec l'eau de Javel ;
- l'acide de CARO génère, dans l'effluent traité, une salinité importante (comme les produits chlorés) sous forme de sulfates.

Les normes de rejet devenant de plus en plus contraignantes (les industriels sont de plus en plus contraints au rejet zéro), il s'est révélé urgent de mettre au point un procédé performant d'oxydation des cyanures alcalins et/ou métalliques, procédé qui ne génère pas de salinité supplémentaire. Un tel procédé de détoxication (cyanures → cyanates) ne doit pas faire intervenir ou, en tout état de cause, ne peut faire intervenir qu'un minimum de composés chimiques tels des chlorures, sulfates, nitrates .... supplémentaires.

Dans le cadre de leurs recherches, les Demanderesses ont conçu et mis au point un tel procédé. Il constitue le premier objet de la présente invention.

Ledit procédé, procédé d'oxydation de cyanures alcalins et/ou métalliques en solution aqueuse, comprend, de façon classique, l'ajout à la solution traitée, maintenue à un pH suffisant pour minimiser voire éviter le dégagement d'acide cyanhydrique en son sein, d'un oxydant puissant. De façon caractéristique, selon l'invention, l'oxydant intervenant est le peroxyde d'hydrogène (produit non polluant) et la solution renfermant ledit peroxyde d'hydrogène est soumise à l'action d'ultrasons (lesdits ultrasons accélèrent la cinétique d'oxydation).

De façon caractéristique, selon l'invention, la solution traitée est soumise à l'action conjointe du peroxyde d'hydrogène et des ultrasons. En d'autres termes, selon l'invention, le peroxyde d'hydrogène est mis à réagir sur une solution activée aux ultrasons. Lesdits ultrasons se sont révélés particulièrement efficaces pour accélérer la vitesse d'oxydation des cyanures par le peroxyde d'hydrogène. On voit plus loin que l'intervention d'un catalyseur est toutefois généralement avantageuse.

Selon une variante préférée de mise en oeuvre du procédé de l'invention, le peroxyde d'hydrogène est ajouté à la solution soumise à l'action des ultrasons. Il n'est toutefois nullement exclu d'ajouter, dans un premier temps, ledit peroxyde d'hydrogène à ladite solution et de soumettre, dans un second temps, la solution renfermant ledit peroxyde d'hydrogène à l'action des ultrasons. En tout état de cause, selon l'invention, la solution traitée est oxydée par du peroxyde d'hydrogène dont l'action oxydante est potentialisée par les ultrasons.

On a mentionné que la solution traitée est maintenue à un pH suffisant, pour minimiser voire éviter le dégagement d'acide cyanhydrique en son sein. Cette opération de maintien de la solution à un pH adéquat est une opération familière à l'homme du métier. En principe, il suffit de maintenir ledit pH à une valeur supérieure à 9,5. Il est toutefois parfois suffisant, en présence de complexes particulièrement stables, de le maintenir à une valeur supérieure à 7. Cette opération de maintien du pH se limite généralement à un simple contrôle du pH de la solution traitée. pH qui demeure supérieur à la valeur critique.

Le procédé de l'invention convient pour oxyder tout type de cyanures alcalins et/ou métalliques en solution aqueuse. Il convient notamment pour traiter des solutions aqueuses renfermant de quelques ppm à quelques g/l de tels cyanures. Il convient tout particulièrement pour le traitement des effluents industriels issus des activités de traitement de surface, tels les effluents de galvanoplastie. Lesdits effluents cyanurés de galvanoplastie contiennent fréquemment du cuivre.

Le procédé de l'invention peut notamment être mis en oeuvre pour traiter des solutions renfermant. à titre de cyanure alcalin et/ou métallique, du cyanure de potassium, de sodium. de cuivre, d'argent, de fer, de nickel, de zinc, d'or ou un mélange de ces cyanures.

Ledit procédé de l'invention peut être mis en oeuvre aussi bien en continu qu'en bâchée. Sa mise en oeuvre ne nécessite pas l'intervention d'un équipement lourd. Elle fait évidemment intervenir un émetteur à ultrasons, en sus de moyens pour l'amenée du peroxyde d'hydrogène.

Ledit peroxyde d'hydrogène est avantageusement ajouté à la solution à traiter sous la forme d'une solution aqueuse de 30 à 50 % en poids de peroxyde d'hydrogène.

Pour ce qui concerne la sonochimie, on peut faire intervenir des ultrasons haute fréquence et/ou des ultrasons basse fréquence.

Les ultrasons haute fréquence sont susceptibles de générer *in situ* le peroxyde d'hydrogène. Toutefois, à ce jour, leur utilisation, au stade industriel, reste très limitée.

On préconise donc de mettre en oeuvre le procédé de l'invention en soumettant la solution traitée à l'action d'ultrasons basse fréquence. On préconise avantageusement l'intervention d'ultrasons dont la fréquence est comprise entre 20 et 36 kHz. Des équipements industriels, générateurs d'ultrasons basse fréquence, existent à ce jour. Ils ont notamment été développés pour la mise en oeuvre de procédés de nettoyage de surfaces...

Les ultrasons sont évidemment appliqués à la solution traitée à une puissance volumique suffisante. La détermination de la puissance volumique optimale est à la portée de l'homme du métier. Généralement, lesdits ultrasons sont appliqués à une puissance volumique comprise entre 0,5 et 75 W/l, avantageusement à une puissance volumique comprise entre 0,5 et 5 W/l. Ces plages de puissance s'entendent, bornes comprises.

On a déjà indiqué que le procédé de l'invention est avantageusement mis en oeuvre en présence d'un catalyseur. Pour optimiser la cinétique de la réaction d'oxydation mise en oeuvre avec le peroxyde d'hydrogène, il est effectivement généralement avantageux de faire intervenir une quantité efficace d'au moins un catalyseur de ladite réaction d'oxydation. L'intervention d'un tel catalyseur, qui constitue un plus en référence à l'oxydation du cyanure d'argent, se révèle quasi indispensable en référence aux autres cyanures. Les Demanderesses ont toutefois aussi obtenu de bons résultats avec des cinétiques acceptables, sans catalyseur, lors de la mise en oeuvre du procédé de l'invention pour l'oxydation de cyanure de cuivre.

Ledit catalyseur consiste avantageusement en un sel métallique, différent d'un cyanure. Il n'intervient qu'à raison de quelques ppm et n'influe donc guère sur la salinité de la solution traitée. Il consiste avantageusement en un sel de cuivre, tel CuSO₄ ou CuCl₂...

Avec quelques ppm d'un tel catalyseur cuivrique, on a obtenu de très bons résultats, notamment sur le cyanure de nickel. L'homme du métier n'ignore pas qu'il s'agit d'un des cyanures les plus difficiles à oxyder....

Avantageusement, lors de la mise en oeuvre du procédé, pour suivre et contrôler la réaction d'oxydation par le peroxyde d'hydrogène, on asservit l'ajout dudit peroxyde à la solution traitée, à la mesure du potentiel d'oxydo-réduction de ladite solution.

Enfin, le procédé de l'invention est généralement mis en oeuvre à la température ambiante. Les solutions traitées, effluents industriels en général, n'ont pas besoin d'être chauffées. Ledit procédé est par ailleurs, de façon classique, mis en oeuvre à la pression atmosphérique.

De façon nullement limitative, on indique ici que le procédé de l'invention a notamment été mis en oeuvre pour traiter de façon satisfaisante des effluents dans les conditions ci-après :
- T (°C) : ambiante
- pH des effluents traités : 8 - 11
- Solutions industrielles de H₂O₂ : de 30 à 50 % en poids
- Puissance acoustique volumique : 0,5 à 75 W/l
- Fréquence de résonance : 20 à 36 kHz
- en bâchée ou en continu ;
dans des cuves à ultrasons de 2 à 75 litres, avec des électrodes d'argent ou d'or, pour la mesure du potentiel des solutions traitées.

On en vient maintenant au deuxième aspect de l'invention, à savoir un dispositif convenant à la mise en oeuvre du procédé précédemment exposé, procédé qui de façon caractéristique conjugue l'action du peroxyde d'hydrogène à celle des ultrasons. Un tel dispositif comporte des moyens pour l'apport du peroxyde d'hydrogène ainsi que des moyens pour l'application des ultrasons. Lesdits moyens peuvent être agencés de diverses manières.

Selon une variante de réalisation préférée, un tel dispositif comprend, de façon caractéristique :
- un réacteur muni de moyens pour son alimentation en la solution à traiter et son alimentation, avantageusement automatique, en peroxyde d'hydrogène. Ledit réacteur est de préférence en acier inoxydable. Au sein d'un tel réacteur, une réflexion optimale des ondes ultrasonores est assurée ;
- un émetteur à ultrasons, agencé au sein dudit réacteur ; avantageusement disposé de façon à assurer une répartition homogène des ultrasons au sein dudit réacteur. (On a indiqué précédemment que de tels dispositifs sont utilisés à ce jour dans le cadre d'autres utilisations.) Les ultrasons sont, dans de telles conditions, appliqués au sein d'un réacteur ; la solution traitée subissant lesdits ultrasons tout au long de son temps de séjour dans ledit réacteur. L'homme du métier conçoit qu'il est alors aisé d'optimiser le couple de paramètres : temps de séjour / puissance des ultrasons appliqués, pour l'obtention de l'effet escompté.

Dans le cadre d'une autre variante de réalisation, les moyens pour l'apport, à la solution traitée, du peroxyde d'hydrogène, sont agencés en amont du réacteur qui renferme les moyens d'application des ultrasons. Ledit réacteur est ainsi alimenté en la solution renfermant (déjà) l'oxydant.

On préconise avantageusement de faire aussi intervenir dans le dispositif de mise en oeuvre du procédé de l'invention :
- des moyens pour la mesure du potentiel d'oxydo-réduction de la solution traitée ; lesdits moyens étant avantageusement couplés aux moyens d'alimentation en peroxyde d'hydrogène, pour assurer une régulation de ladite alimentation; et, aussi, avantageusement,
- des moyens, incluant une électrode de pH, pour réguler le pH de ladite solution.

En référence à ladite électrode de pH, on a vu qu'il convenait de maintenir le pH de la solution traitée au-dessus d'une valeur critique, valeur critique correspondant au dégagement d'acide cyanhydrique.

Pour ce qui concerne les moyens de mesure du potentiel d'oxydo-réduction, ils interviennent pour le suivi de la réaction et avantageusement pour son contrôle. Lesdits moyens comprennent au moins une électrode de mesure et une électrode de référence. L'électrode de mesure est une électrode, connue en soi, spécifique des ions cyanures. Dans la mesure où elle intervient, plongée dans une solution activée aux ultrasons, elle doit évidemment être résistante auxdits ultrasons. On préconise l'intervention d'une électrode en argent ou en or, insensible auxdits ultrasons. Pour ce qui concerne l'électrode de référence et/ou l'électrode de pH, on les soustrait avantageusement à l'action des ultrasons en les faisant intervenir dans un volume de solution traitée, agencé en dérivation du volume principal de solution traitée ; agencé en principe en dérivation du réacteur de traitement. Selon une variante de réalisation, le réacteur intervenant est en un matériau conducteur, tel l'acier inoxydable, et il est *per se* utilisé comme électrode de référence.

A la lecture de ce qui précède, l'homme du métier a saisi tout l'intérêt de l'invention qui propose un procédé de traitement des effluents cyanurés sans générer de salinité supplémentaire au sein desdits effluents ; la salinité apportée par le catalyseur éventuellement présent étant négligeable.

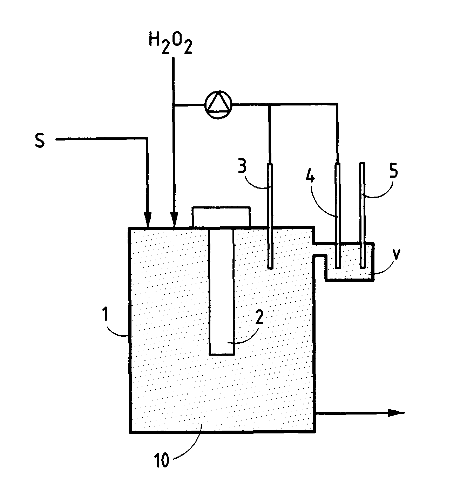

Ladite invention, sous ses deux aspects (procédé/dispositif) est illustrée sur l'unique figure annexée. Il est schématisé, sur cette figure, un dispositif convenant à la mise en oeuvre du procédé de l'invention, dispositif du type de celui décrit, en termes généraux, ci-dessus.

Le réacteur 1 est alimenté, d'une part en la solution cyanurée à traiter S. et d'autre part en l'oxydant H₂O₂. Au sein dudit réacteur 1, que l'on peut qualifier de cuve à ultrasons, il est aménagé, l'émetteur à ultrasons ou tube résonateur 2. La quantité d'H₂O₂ ajoutée est contrôlée par la mesure du potentiel du milieu réactionnel 10. L'électrode de mesure 3 est placée dans le réacteur 1 tandis que l'électrode de référence 4 est installée dans une dérivation (d'un volume v de milieu réactionnel 10). Ladite électrode de référence 4 est ainsi soustraite aux effets ultrasoniques, ces derniers induisant en son sein des problèmes de tenue mécanique. De la même façon, on a prévu dans ledit volume de solution dérivé v l'intervention d'une électrode de pH 5. Ladite électrode de pH permet de s'assurer que le milieu reste suffisamment basique.

L'invention est maintenant illustrée par l'exemple ci-après.

Dans un dispositif tel que schématisé sur la figure annexée (cuve de 1,5 l de volume), on a traité un effluent qui présentait les caractéristiques ci-après :
- Cyanure totaux 200 mg/l
- Cuivre 48 mg/l
- Sn 120 mg/l
- pH 10,8
- température 15°C
- potentiel -87 mV.

Le procédé a été mis en oeuvre en continu sur un débit d'effluent de 1,5 l/h, sous activation par ultrasons basse fréquence (30 kHz), à une puissance de 50 W/l et avec ajout automatique de H₂O₂ (35 % en poids) en fonction du potentiel dudit effluent traité (potentiel maintenu entre 90 et 120 mV).

Le traitement a duré 2 heures. A l'issue de ces 2 heures, I'effluent traité présentait les caractéristiques ci-après :
- Cyanures libres < 0,05 mg/l
- Cyanures totaux < 0,05 mg/l
- pH 10,3 (aucun ajout de soude n'a été nécessaire).

Une fois les cyanures traités, les métaux présents. Cu et Sn. ont été précipités. à la chaux (par neutralisation).

## Revendications

1. Procédé d'oxydation de cyanures alcalins et/ou métalliques en solution aqueuse, comprenant l'ajout à ladite solution, maintenue à un pH suffisant pour minimiser voire éviter le dégagement d'acide cyanhydrique en son sein, d'un oxydant puissant, caractérisé en ce que ledit oxydant puissant est le peroxyde d'hydrogène et en ce que ladite solution, renfermant ledit peroxyde d'hydrogène, est soumise à l'action d'ultrasons.

2. Procédé selon la revendication 1, caractérisé en ce que ladite solution est un effluent industriel issu des activités de traitement de surface.

3. Procédé selon l'une des revendications 1 ou 2, caractérisé en ce que lesdits cyanures sont choisis parmi les cyanures de potassium, de sodium, de cuivre, d'argent, de fer, de nickel, de zinc, d'or et leurs mélanges.

4. Procédé selon l'une quelconque des revendications 1 à 3, caractérisé en ce qu'il est mis en oeuvre en continu ou en bâchée.

5. Procédé selon l'une quelconque des revendications 1 à 4, caractérisé en ce que ledit peroxyde d'hydrogène est ajouté sous la forme d'une solution aqueuse dont la concentration en peroxyde d'hydrogène est comprise entre 30 et 50 % en poids.

6. Procédé selon l'une quelconque des revendications 1 à 5, caractérisé en ce que ladite solution est soumise à l'action d'ultrasons basse fréquence ; dont la fréquence est avantageusement comprise entre 20 et 36 kHz.

7. Procédé selon l'une quelconque des revendications 1 à 6, caractérisé en ce que lesdits ultrasons sont appliqués à ladite solution à une puissance volumique comprise entre 0,5 et 75 W/l, avantageusement à une puissance volumique comprise entre 0,5 et 5 W/l.

8. Procédé selon l'une quelconque des revendications 1 à 7, caractérisé en ce qu'il est mis en oeuvre en présence d'une quantité efficace d'au moins un catalyseur, consistant avantageusement en un sel de cuivre.

9. Procédé selon l'une quelconque des revendications 1 à 8, caractérisé en ce que ledit ajout de peroxyde d'hydrogène est asservi à la mesure du potentiel d'oxydo-réduction de ladite solution.

10. Procédé selon l'une quelconque des revendications 1 à 9, caractérisé en ce qu'il est mis en oeuvre à température ambiante.

11. Dispositif convenant à la mise en oeuvre du procédé selon l'une quelconque des revendications précédentes, caractérisé en ce qu'il comprend un réacteur (1), avantageusement réalisé en acier inoxydable, muni de moyens pour son alimentation en la solution (S) à traiter et son alimentation, avantageusement automatique. en peroxyde d'hydrogène (H₂O₂); ledit réacteur (1) renfermant un émetteur à ultrasons (2), avantageusement disposé pour assurer une répartition homogène des ultrasons au sein dudit réacteur (1).

12. Dispositif selon la revendication 11, caractérisé en ce qu'il comprend en outre des moyens (3,4) pour la mesure du potentiel d'oxydo-réduction de la solution traitée (10) dans ledit réacteur (1), lesdits moyens étant avantageusement couplés aux moyens d'alimentation en peroxyde d'hydrogène (H202) pour réguler ladite alimentation ; et, avantageusement, des moyens, incluant une électrode de pH (5), pour réguler le pH de ladite solution (10).

13. Dispositif selon la revendication 12, caractérisé en ce que lesdits moyens (3,4) pour la mesure du potentiel d'oxydo-réduction de la solution traitée (10) comprennent une électrode de référence (4) et une électrode de mesure (3) et en ce que ladite électrode de référence (4) et ladite électrode de pH (5), si elle intervient, sont plongées dans un volume (v) de ladite solution traitée (10), agencé en dérivation dudit réacteur (1) comprenant l'émetteur à ultrasons (2).

14. Dispositif selon la revendication 12, caractérisé en ce que ledit réacteur (1) est réalisé en acier inoxydable et en ce que lesdits moyens (3, 4) pour la mesure du potentiel d'oxydo-réduction de la solution traitée (10) comprennent une électrode de mesure et ledit réacteur (1), utilisé comme électrode de référence.
